# FASCICULE DE BREVET EUROPEEN

(11) **EP 1 006 074 B1**
(45) Date de publication et mention de la délivrance du brevet: **01.02.2006**
(21) Numéro de dépôt: 99402946.0
(22) Date de dépôt: 26.11.1999
(51) Int. Cl.: B66F 3/06, F16G 13/18, F16H 19/00

(54) **Chaîne travaillant en poussée pour des charges**
Schubgliederkette für Lasten
Push chain for loads

(30) Priorité: 30.11.1998 FR 9815031
(43) Date de publication de la demande: 07.06.2000
(73) Titulaire: Serapid France, 76510 Saint-Nicolas-d'Aliermont (FR)
(72) Inventeur: Novick Philippe, 76630 ENVERMEU (FR)
(74) Mandataire: Cabinet HERRBURGER

(56) Documents cités:
- FR-A- 2 659 714
- US-A- 2 574 657
- US-A- 4 406 096
- US-A- 5 156 574

## Description

La présente invention concerne une colonne élévatrice de charges destinée à transmettre des efforts de poussée verticale et permettant de lever des charges sur des courses importantes, comme la montre le document US-A-2 574 657.

De manière non limitative, une telle colonne est particulièrement adaptée à la mise à niveau des platesformes.

De manière plus précise, la présente invention a pour objet de proposer un dispositif permettant de lever des charges sur des courses importantes, simple tant du point de vue de la fabrication que de la mise en oeuvre et ne comportant en outre qu'un nombre restreint de pièces.

A cet effet, la présente invention concerne un dispositif d'élévation destiné à transmettre des efforts de poussée verticale caractérisé en ce qu'il est constitué d'un carter équipé de deux pignons rotatifs entraînant une colonne élévatrice articulée comportant une branche horizontale et une branche verticale séparées par une partie courbe, la colonne élévatrice étant constituée de deux flancs articulés parallèles reliés au moyen d'axes de liaison dirigés transversalement coopérant avec les pignons d'entraînement.

Conformément à l'invention, chaque flanc est constitué de deux rangées contiguës de plaquettes essentiellement rectangulaires placées bout à bout dans une même rangée et décalées longitudinalement d'une rangée à une autre.

Chaque plaquette comporte, d'une part, deux faces principales percées de trous de réception des axes de liaison et par l'une desquelles les plaquettes d'une rangée s'appliquent contre les plaquettes de la rangée contiguë, et d'autre part, quatre faces de chant, à savoir deux faces de chant latérales, l'une interne l'autre externe par rapport à la partie courbe de la colonne élévatrice et deux faces de chant latérales définissant une face active avant et une face active arrière appelées à prendre appui respectivement contre les faces actives arrière et avant des plaquettes voisines d'une même rangée lorsque le tronçon de colonne élévatrice dont font partie les plaquettes considérées s'étend verticalement.

Conformément à cette configuration, la colonne élévatrice a pour fonction de transmettre des efforts de poussée tandis que le carter assure le transfert de puissance et le maintien des plaquettes soumises aux efforts de compression.

Le principe de fonctionnement du dispositif conforme à l'invention est donc basé sur la transformation d'un mouvement de rotation en un mouvement de translation ; ce dispositif est donc assimilable à une barre articulée.

Ce principe permet d'obtenir, vis-à-vis des systèmes d'élévation à vérin de l'art antérieur, un encombrement réduit pour une course développée plus importante.

Le dispositif conforme à l'invention se distingue en outre par sa fiabilité et sa sécurité en cas d'incidents.

Selon l'invention, les plaquettes sont, de préférence, toutes identiques et décalées d'un pas égal à la moitié de leur longueur d'une rangée à la rangée contiguë.

Il s'agit là d'une caractéristique particulièrement avantageuse de l'invention vu qu'elle permet de n'utiliser qu'un seul outil de découpe pour toutes les plaquettes, quelle que soit leur situation sur la colonne élévatrice ; cette simplification permet une baisse significative du prix de revient de la colonne élévatrice.

Bien entendu, les dimensions des plaquettes et le pas de la colonne élévatrice doivent, dans chaque cas et pour une longueur donnée, être optimisés pour diminuer le prix de revient pour une longueur donnée : en effet, plus le pas est grand, moins le nombre de pièces est grand mais plus l'encombrement du carter est important.

Il est à noter que ce pas est, en règle générale, de l'ordre de 100 mm.

Un autre avantage du dispositif conforme à l'invention est lié au fait que la colonne élévatrice a une section « fermée » définie, d'une part, par ses deux flancs articulés (grâce à la présence des deux rangées contiguës de plaquettes) et d'autre part, par les axes de liaison qui sont « emprisonnés » entre les deux flancs articulés de la colonne élévatrice ; ceci permet de garantir une meilleure stabilité de l'ensemble.

Selon une caractéristique préférentielle de l'invention, chaque plaquette est percée de trois trous de réception de trois axes de liaison respectifs disposés selon un triangle isocèle.

Ces trous se subdivisent en un trou d'entraînement contigu à la face de chant longitudinale externe centré sur l'axe transversal de la plaquette et deux trous d'articulation disposés symétriquement de part et d'autre de cet axe et contigus à la face de chant longitudinale interne.

Les trous d'articulation des plaquettes des deux rangées contiguës d'un même flanc de la colonne élévatrice sont superposés deux à deux.

Les axes de liaison des deux flancs de la colonne élévatrice se subdivisent, quant à eux, en, d'une part, des axes d'articulation qui pénètrent dans les trous d'articulation superposés deux à deux des plaquettes des deux rangées contiguës respectives et, d'autre part, des axes d'entraînement qui pénètrent alternativement dans les trous d'entraînement des plaquettes de l'une ou l'autre des deux rangées contiguës.

Le nombre des axes de liaison et leur positionnement en triangulation permettent d'avoir un effort de poussée mieux réparti.

Selon une autre caractéristique de l'invention, les faces de chant latérales des plaquettes sont munies d'encoches essentiellement semi-circulaires avec plat de dégagement permettant l'insertion des axes d'entraînement lorsque ces faces prennent appui les unes contre les autres.

La présence de ces encoches est indispensable pour permettre l'application, les unes contre les autres, des faces actives des plaquettes au droit des axes d'entraînement.

Selon une autre caractéristique de l'invention, les faces de chant longitudinales internes des plaquettes sont biseautées à leurs extrémités.

Cette configuration permet l'articulation de la colonne élévatrice au niveau de sa partie courbe.

Selon une autre caractéristique de l'invention, les pignons d'entraînement sont fixés à la partie inférieure de la branche verticale de la colonne élévatrice, sur la face externe de celle-ci et coopèrent avec les axes d'entraînement des plaquettes.

Ce positionnement particulier des pignons d'entraînement constitue également une caractéristique essentielle du dispositif conforme à l'invention vu qu'il permet d'obtenir un meilleur « verrouillage » et donc une plus grande stabilité de la colonne élévatrice.

Il est à noter que les galets montés sur là face externe de la colonne (côté pignons) servent à l'entraînement de celle-ci tandis que les galets montés sur sa face interne servent à son guidage.

Les caractéristiques du dispositif d'élévation de charges qui fait l'objet de l'invention seront décrites plus en détail en se référant aux dessins annexés dans lesquels :
- la figure 1 est une vue schématique du dispositif d'élévation de charge, le flasque supérieur du carter ayant été enlevé,
- la figure 2 est une vue de face schématique de l'un des flancs de la colonne élévatrice,
- la figure 3 est une vue de côté de cette colonne,
- la figure 4 est une vue de détail des encoches.

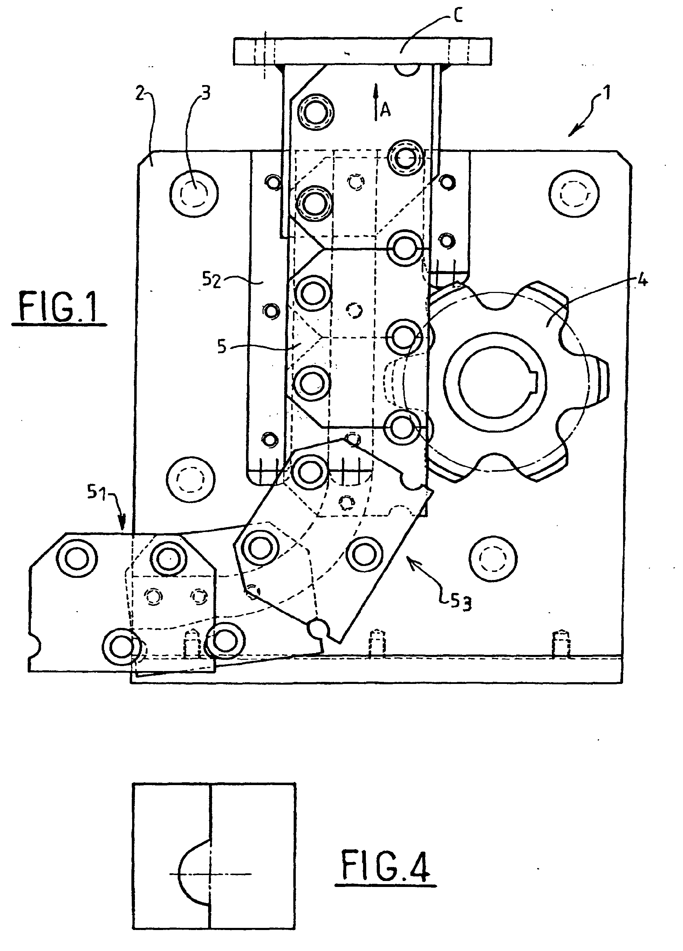

Selon la figure 1, le dispositif d'élévation a pour fonction de transmettre des efforts de poussée verticale selon la flèche A pour lever des charges C sur des courses importantes.

Ce dispositif est essentiellement constitué, d'une part, d'un carter 1 comportant deux flasques 2 reliés par des vis 3 dont un seul est représenté sur la figure 1 et renfermant deux pignons rotatifs 4, et, d'autre part, d'une colonne élévatrice articulée 5 entraînée en va et vient par les pignons rotatifs 4 et comportant une branche horizontale 5₁ et une branche verticale 5₂ séparées par une partie courbe 5₃.

Selon les figures 1 à 3, la colonne élévatrice 5 est constituée de deux flancs articulés parallèles 6₁, 6₂, reliés au moyen d'axes de liaison 7 dirigés transversalement et équipés à leurs extrémités externes de galets d'entraînement 8 qui coopèrent avec les pignons d'entraînement 4 ou de galets de guidage 8' qui coopèrent avec des rails de guidage équipant les flasques 2 du carter 1 qui ne sont pas représentés sur les figures. Les galets d'entraînement 8 et les galets de guidage 8' sont montés fous sur les axes de liaison 7.

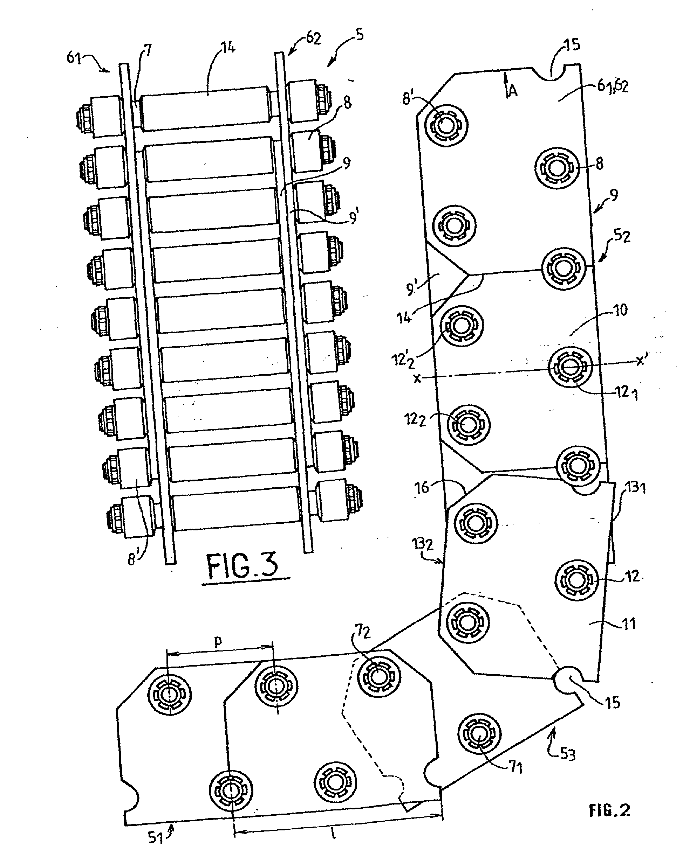

Plus précisément et selon les figures 2 et 3, chacun des flancs 6₁, 6₂ est constitué de deux rangées contiguës. 9, 9' de plaquettes 10 essentiellement rectangulaires qui sont toutes identiques.

Les plaquettes 10 d'une même rangée 9, 9' sont placées bout à bout tandis que les plaquettes 10 contiguës d'une rangée 9 à la rangée contiguë 9' sont décalées longitudinalement d'un pas p égal à la moitié de leur longueur ℓ.

Comme on peut le voir plus précisément sur la figure 2, sur laquelle pour des raisons de clarté une seule des plaquettes 10 de la rangée interne 9 a été représentée en pointillés, les plaquettes 10 sont toutes percées sur leurs faces principales 11 par lesquelles elles s'appliquent les unes sur les autres d'une rangée 9, 9' à une autre de trois trous de réception 12 des axes de liaison 7 disposés selon un triangle isocèle.

Chacune des plaquettes 10 comporte par ailleurs quatre faces de chant se subdivisant, d'une part, en deux faces de chant longitudinales 13₁, 13₂ dont l'une 13₁ est interne tandis que l'autre 13₂ est externe par rapport à la partie courbe 5₃ de la colonne élévatrice 5, et, d'autre part, en deux faces de chant latérales 14.

Les faces de chant latérales 14 correspondent à des faces actives avant et arrière qui prennent respectivement appui contre les faces actives arrière et avant des plaquettes 10 voisines d'une même rangée 9, 9' sur la branche verticale 5₂ de la colonne élévatrice 5.

Par ailleurs, et selon la figure 2, les trous de réception 12 des axes de liaison 7 se subdivisent en, d'une part, un trou d'entraînement 12₁ contigu à la face de chant longitudinale externe 13₁ et centré sur l'axe transversal x, x' de la plaquette 10 et en d'autre part deux trous d'articulation 12₂, 12'₂ disposés symétriquement de part et d'autre de cet axe x, x' et contigus à la face de chant longitudinale interne 13₂.

Comme on peut s'en rendre compte sur la figure 2, les trous d'articulation 12₂, 12'₂ des plaquettes 10 des deux rangées contiguës 9, 9' d'un même flanc 6₁, 6₂ de la colonne élévatrice 5 sont superposés deux à deux.

Par ailleurs, et selon la figure 2, les axes de liaison 7 des deux flancs 6₁, 6₂ de la colonne élévatrice 5 se subdivisent en, d'une part, des axes d'entraînement 7₁ portant des galets d'entraînement 8 et, d'autre part, des axes d'articulation 7₂ portant des galets de guidage 8'.

Les axes d'entraînement 7₁ pénètrent alternativement dans les trous d'entraînement 12₁ des plaquettes 10 de l'une ou de l'autre des deux rangées contiguës 9, 9' des flancs 6₁, 6₂ tandis que les axes d'articulation 7₂ pénètrent dans les trous d'articulation 12₂, 12'₂ superposés deux à deux des plaquettes 10 des deux rangées contiguës 9, 9' respectives.

Selon la figure 3, les axes d'entraînement 7₁ et les axes d'articulation 7₂ sont équipés, à leur partie interne située entre les plaquettes 10 des deux flancs 6₁, 6₂, de galets de renvoi 14 montés fous de manière à permettre à la colonne élévatrice de se plier au niveau de la partie courbe 5₃, et à l'extérieur de ces plaquettes 10 dés galets de guidage et d'entraînement 8, 8' également montés fous.

Comme représenté sur la figure 1, les pignons 4 sont fixés dans le carter 1 à la partie inférieure de la branche verticale 5₂ de la colonne élévatrice 5 et sur la face externe de celle-ci.

Par ailleurs, selon la figure 2, les faces de chant latérales 14 des plaquettes 10 sont munies d'encoches essentiellement semi-circulaires avec plat de dégagement 15 de réception des axes d'entraînement 7₂ au niveau des branches horizontales 5₁ et verticales 5₂ de la colonne élévatrice 5 où ces faces 14 viennent en appui les unes contre les autres. Ces encoches 15 sont représentées plus en détail sur la figure 4.

Les faces de chant longitudinales internes 13₂ des plaquettes 10 sont en outre munies d'extrémités biseautées 16 permettant l'articulation de la colonne élévatrice 5 au niveau de sa partie courbe 5₃.

## Revendications

1. Dispositif d'élévation destiné à transmettre des efforts de poussée verticale, permettant de lever des charges sur des courses importantes,
**caractérisé en ce qu'**
- il est constitué d'un carter (1) équipé de deux pignons rotatifs (4) entraînant une colonne élévatrice articulée (5) comportant une branche horizontale (5₁) et une branché verticale (5₂) séparées par une partie courbe (5₃) et
- la colonne élévatrice (5) est constituée de deux flancs articulés (6₁, 6₂) parallèles reliés au moyen d'axes de liaison (7) dirigés transversalement répartis sur deux rangées parallèles et coopérant avec les pignons d'entraînement (4), chaque flanc (6₁, 6₂) étant constitué de deux rangées contiguës (9, 9') de plaquettes (10) essentiellement rectangulaires placées bout à bout dans une même rangée (9, 9') et décalées longitudinalement d'une rangée (9) à une autre (9'), chaque plaquette (10) comportant, d'une part, deux faces principales (11) percées de trous de réception (12) des axes de liaison (7) répartis selon une configuration triangulaire et par l'une desquelles les plaquettes (10) d'une rangée (9) s'appliquent contre les plaquettes (10) de la rangée contiguë (9'), et d'autre part, quatre faces de chant (13, 14), à savoir deux faces de chant longitudinales (13₁, 13₂), l'une interne l'autre externe par rapport à la partie courbe (5₃) de la colonne élévatrice (5) et deux faces de chant latérales (14) définissant une face active avant et une face active arrière appelées à prendre appui respectivement contre les faces actives arrière et avant des plaquettes (10) voisines d'une même rangée (9, 9') lorsque le tronçon de colonne élévatrice (5) dont font partie les plaquettes considérées s'étend verticalement.

2. Dispositif d'élévation selon la revendication 1,
**caractérisé en ce que**
les plaquettes (10) sont décalées d'un pas (p) égal à la moitié de leur longueur (ℓ) d'une rangée (9) à la rangée (9') contiguë.

3. Dispositif d'élévation selon l'une quelconque des revendications 1 et 2,
**caractérisé en ce que**
les plaquettes (10) sont toutes identiques.

4. Dispositif d'élévation selon l'une quelconque des revendications 1 à 3,
**caractérisé en ce que**
chaque plaquette (10) est percée de trois trous de réception (12) de trois axes de liaison (7) respectifs disposés selon un triangle isocèle, à savoir un trou d'entraînement (12₁) contigu à la face de chant longitudinale externe (13₁) centré sur l'axe transversal (x-x') de la plaquette (10) et deux trous d'articulation (12₂, 12'₂) disposés symétriquement de part et d'autre de cet axe (x-x') et contigus à la face de chant longitudinale interne (13₂), les trous d'articulation (12₂, 12'₂) des plaquettes (10) des deux rangées contiguës (9, 9') d'un même flanc (6₁, 6₂) de la colonne élévatrice (5) étant superposés deux à deux.

5. Dispositif d'élévation selon la revendication 4,
**caractérisé en ce que**
les axes de liaison (7) des deux flancs (6₁, 6₂) de la colonne élévatrice (5) se subdivisent en d'une part des axes d'articulation (7₂) pénétrant dans les trous d'articulation (12₂, 12'₂) superposés deux à deux des plaquettes (10) des deux rangées contiguës (9, 9') respectives, et d'autre part, des axes d'entraînement (7₁) pénétrant alternativement dans les trous d'entraînement (12₁) des plaquettes (10) de l'une ou l'autre des deux rangées contiguës (9, 9').

6. Dispositif d'élévation selon la revendication 5,
**caractérisé en ce que**
les faces de chant latérales (14) des plaquettes (10) sont munies d'encoches essentiellement semi-circulaires avec plat de dégagement (15) permettant l'insertion des axes d'entraînement (7₁) lorsque ces faces (14) prennent appui les unes contre les autres.

7. Dispositif d'élévation selon la revendication 6,
**caractérisé en ce que**
les faces de chant longitudinales internes (13₂) des plaquettes (10) sont biseautées à leurs extrémités de façon à permettre l'articulation de la colonne élévatrice (5) au niveau de sa partie courbe (5₃).

8. Dispositif d'élévation selon l'une quelconque des revendications 1 à 7,
**caractérisé en ce que**
les pignons d'entraînement (4) sont fixés à la partie inférieure de la branche verticale (5₂) de la colonne élévatrice (5), sur la face externe de celle-ci et coopèrent avec les axes d'entraînement (7₁) des plaquettes (10).

## Patentansprüche

1. Hebevorrichtung zur Übertragung vertikaler Schubkräfte, mit der Lasten über lange Hubwege gehoben werden können,
**dadurch gekennzeichnet, dass**
- sie aus einem Gehäuse (1) mit zwei rotierenden Ritzeln (4) besteht, die eine mit Gelenken versehene Hubsäule (5) mit einen horizontalen (5₁) und einem davon durch einen gebogenen Abschnitt (5₃) getrennten vertikalen Strang (5₂) antreiben und
- die Hubsäule (5) aus zwei parallelen, mit Gelenken versehenen Flanken (6₁, 6₂) besteht, die mit Hilfe von quer gerichteten, auf zwei parallele Reihen verteilte und mit den Antriebsritzeln (4) zusammenwirkenden Verbindungsachsen (7) verbunden sind, wobei jede Flanke (6₁, 6₂) aus zwei aneinander liegenden Reihen (9, 9') von im Wesentlichen rechteckigen kleinen Platten (10) besteht, die in der gleichen Reihe (9, 9') mit den Enden aneinander und von einer Reihe (9) zur anderen (9') in Längsrichtung versetzt angeordnet sind, und wobei jede kleine Platte (10) einerseits zwei mit Aufnahmelöchern (12) für die in Dreiecksform aufgeteilten Verbindungsachsen (7) versehene Hauptseiten (11) hat und mit einer von diesen die kleinen Platten (10) von einer Reihe (9) an den kleinen Platten (10) der unmittelbar benachbarten Reihe (9') anliegen, und andererseits vier Seitenkanten (13, 14), nämlich zwei längsgerichtete Seitenkanten (13₁, 13₂), d. h. in Bezug auf den gebogenen Abschnitt der Hubsäule (5) eine innere und eine äußere, und zwei quer verlaufende, eine vordere Funktionsseite und eine hintere Funktionsseite bildende Seitenkanten (14), die dazu bestimmt sind, sich jeweils an den hinteren und vorderen Funktionsseiten der benachbarten kleinen Platten (10) der gleichen Reihe (9, 9') abzustützen, wenn sich der Abschnitt der Hubsäule (5), zu dem die betrachteten kleinen Platten gehören, vertikal erstreckt.

2. Hebevorrichtung nach Anspruch 1, **dadurch gekennzeichnet, dass** die kleinen Platten (10) um einen der Hälfte ihrer Länge (1) entsprechenden Abstand (p) von einer Reihe (9) zur daranliegenden Reihe (9') versetzt sind.

3. Hebevorrichtung nach einem der Ansprüche 1 und 2, **dadurch gekennzeichnet, dass** die kleinen Platten (10) alle identisch sind.

4. Hebevorrichtung nach einem der Ansprüche 1 bis 3, **dadurch gekennzeichnet, dass** jede kleine Platte (10) drei jeweils in Form eines gleichschenkligen Dreiecks angeordnete Aufnahmelöcher (12) für drei Verbindungsachsen (7) aufweist, nämlich ein der längsgerichteten äußeren Seitenkante (13₁) benachbartes, um die Querachse (x-x') der kleinen Platte (10) zentriertes Antriebsloch (12₁) und zwei beidseits dieser Achse (x-x') symmetrisch angeordnete und der längs-gerichteten inneren Seitenkante (13₂) benachbarte Gelenk-löcher (12₁, 12'₂), wobei die Gelenklöcher (12₂, 12'₂) der kleinen Platten (10) der beiden aneinander liegenden Reihen (9, 9') der gleichen Flanke (6₁, 6₂) der Hubsäule (5) paarweise übereinander angeordnet sind.

5. Hebevorrichtung nach Anspruch 4, **dadurch gekennzeichnet, dass** die Verbindungsachsen (7) der beiden Flanken (6₁, 6₂) der Hubsäule (5) sich unterteilen lassen in einerseits Gelenkachsen (7₂), die in die paarweise übereinander angeordneten Gelenklöcher (12₂, 12'₂) der kleinen Platten (10) der beiden jeweils aneinander liegenden Reihen (9, 9') eingesetzt sind, und andererseits Antriebsachsen (7₁), die wechselweise in die Antriebslöcher (12₁) der kleinen Platten (10) der einen oder der anderen der beiden aneinander liegenden Reihen (9, 9') eingesetzt sind.

6. Hebevorrichtung nach Anspruch 5, **dadurch gekennzeichnet, dass** die quer verlaufenden Seitenkanten (14) der kleinen Platten (10) mit im Wesentlichen halbkreisförmigen Ausnehmungen (15) mit einer Loslöse-Abflachung versehen sind, welche das Umschließen der Antriebsachsen (7₁) ermöglicht, wenn diese Seiten (14) die Stellung einnehmen, in der sie sich aneinander abstützen.

7. Hebevorrichtung nach Anspruch 6, **dadurch gekennzeichnet, dass** die längsgerichteten inneren Seitenkanten (13₂) der kleinen Platten (10) an ihren Enden abgeschrägt sind, um die Schwenkbewegung der Hubsäule (5) im Bereich ihres gebogenen Abschnitts (5₃) zu ermöglichen.

8. Hebevorrichtung nach einem der vorhergehenden Ansprüche 1 bis 7, **dadurch gekennzeichnet, dass** die Antriebsritzel (4) am unteren Teil des vertikalen Strangs (5₂) der Hubsäule (5) auf deren Außenseite befestigt sind und mit den Antriebsachsen (7₁) der kleinen Platten (10) zusammenwirken.

## Claims

1. Lifting device designed to transmit vertical thrust forces, enabling loads to be lifted over large distances,
**characterised in that**
- it comprises a housing (1) fitted with two rotating gears (4) driving an articulated lifting column (5) comprising a horizontal branch (5₁) and a vertical branch (5₂) separated by a curved part (5₃) and
- the lifting column (5) is made up of two parallel, articulated flanks (6₁, 6₂) linked by means of transversely oriented connecting shafts (7) distributed across two parallel rows and co-operating with the driving gears (4), each flank (6₁, 6₂) comprising two contiguous rows (9, 9') of essentially rectangular plates (10) placed end to end within a same row (9, 9') and longitudinally offset from one row (9) to the other (9'), each plate (10) comprising, on the one hand, two main faces (11) through which extend receiving orifices (12) for the connecting shafts (7) distributed in a triangular configuration and by means of one of which the plates (10) in one row (9) are applied against the plates (10) of the contiguous row (9'), and, on the other hand, four edge faces (13, 14), namely two longitudinal edge faces (13₁, 13₂), one being internal and the other being external relative to the curved part (5₃) of the lifting column (5), and two lateral edge faces (14) defining a front active face and a rear active face designed to be supported respectively against the rear and front active faces of adjacent plates (10) of a same row (9, 9') when the section of the lifting column (5) of which the plates in question form part extends vertically.

2. Lifting device as claimed in claim 1,
**characterised in that**
the plates (10) are offset by a pitch (p) equal to half their length (ℓ) from one row (9) to the continuous row (9').

3. Lifting device as claimed in any one of claims 1 and 2,
**characterised in that**
the plates (10) are all identical.

4. Lifting device as claimed in any one of claims 1 to 3,
**characterised in that**
each plate (10) has three orifices (12) extending through it for receiving three respective connecting shafts (7) disposed in an isosceles triangle, namely, a drive orifice (12₁) contiguous with the outer longitudinal edge face (13₁) centred on the transverse axis (x-x=) of the plate (10) and two articulation orifices (12₂, 12'₂) disposed symmetrically on either side of this axis (x-x=) and contiguous with the inner longitudinal edge face (13₂), the articulation orifices (12₂, 12'₂) of the plates (10) of the two contiguous rows (9, 9') on a same flank (6₁, 6₂) of the lifting column (5) being positioned one above the other in pairs.

5. Lifting device as claimed in claim 4,
**characterised in that**
the connecting shafts (7) of the two flanks (6₁, 6₂) of the lifting column (5) are sub-divided into articulation shafts (7₂) extending through the articulation orifices (12₂, 12'₂), disposed one above the other in pairs, of the plates (10) of two respective contiguous rows (9, 9') on the one hand, and drive shafts (7₁) extending alternately through the drive orifices (12₁) of the plates (10) of one or the other of the two contiguous rows (9, 9').

6. Lifting device as claimed in claim 5,
**characterised in that**
the lateral edge faces (14) of the plates (10) are provided with essentially semi-circular notches with a planar release section (15) when these faces (14) are supported one against the other, allowing the drive shafts (7₁) to be inserted.

7. Lifting device as claimed in claim 6,
**characterised in that**
the external longitudinal edge faces (13₂) of the plates (10) are bevelled at their ends to enable the lifting column (5) to be articulated on a level with its curved part (5₃).

8. Lifting device as claimed in any one of claims 1 to 7,
**characterised in that**
the driving gears (4) are secured to the lower part of the vertical branch (5₂) of the lifting column (5) on the external face thereof and co-operate with the drive shafts (7₁) of the plates (10).
